# EUROPEAN PATENT SPECIFICATION

(11) **EP 2 042 307 B1**
(45) Date of publication and mention of the grant of the patent: **01.09.2010**
(21) Application number: 08017032.7
(22) Date of filing: 26.09.2008
(51) Int. Cl.: B41C 1/10, B41N 3/00

(54) **Collection method, collection system, recycling method and collection container for used printing plate**
Sammelverfahren, Sammelsystem, Recyclingverfahren und Sammelbehälter für gebrauchte Druckplatten
Procédé de collecte, système de collecte, procédé de recyclage et conteneur de collecte pour plaque d'impression usée

(30) Priority: 28.09.2007 JP 2007254310; 29.11.2007 JP 2007308307
(43) Date of publication of application: 01.04.2009
(73) Proprietor: FUJIFILM Corporation, Tokyo 106-8620 (JP)
(72) Inventor: Yoshikawa, Naoki, Haibara-gun Shizuoka (JP); Okishi, Yoshio, Haibara-gun Shizuoka (JP); Osada, Masakazu, Haibara-gun Shizuoka (JP)
(74) Representative: Höhfeld, Jochen

(56) References cited:
- JP-A- 2002 200 728
- JP-A- 2002 307 640
- US-A1- 2006 207 454

## Description

### FIELD OF THE INVENTION

The present invention relates to a collection method, a collection system, a recycling method and a collection container for used printing plates.

### BACKGROUND OF THE INVENTION

Aluminum is commonly used to produce a substrate of a printing plate. A surface of the aluminum substrate is provided with a plurality of uniform and closely packed cavities known as pits. The pits are formed by roughening, for example, mechanical roughening, electrochemical roughening, chemical roughening, and a combination of them. The pits increase adherence of the aluminum substrate and a photosensitive layer formed on the aluminum substrate.

Formation of uniform and closely packed pits requires a high degree of purity in the aluminum composition of the substrate for the printing plate. For this reason, an aluminum master alloy having the percentage of aluminum content of at least 99.7 mass% is used as a raw material of the substrate. However, surging raw material costs raises the price of the aluminum master alloy, which is one of the factors to increase the production costs of the printing plates.

A method for producing a printing plate at low cost by the combined use of an aluminum master alloy and used printing plates as a raw material of a substrate for the printing plate is suggested (see Japanese Patent No. 3420817 and Japanese Patent Laid-Open Publication No. 2000-351060). A method for producing a printing plate by using two types of used printing plates which differ in aluminum composition of a substrate is suggested (see Japanese Patent Laid-Open Publication No. 2002-225449).

In addition, a method for producing a printing plate at lower cost by adding low purity aluminum products such as commercially available aluminum cans to raw materials of the substrate is suggested (see Japanese Patent Laid-Open Publication No. 2002-331767).

As described above, in order to steadily produce the printing plates at low cost by using the used printing plates as the raw material of the substrate, a recycle system in which the used printing plates are efficiently and reliably collected is indispensable.

Although a system to recycle the low-purity aluminum products such as the aluminum cans is common, a system to recycle high-purity aluminum products as the raw material for the printing plates has not been established. The high-purity aluminum products are recycled in the same manner as the low-purity cans in the recycling, and the used printing plates are not efficiently used.

Aluminum is used in various fields, and its usage is steadily increasing. As a result, the demand-supply balance of aluminum is disturbed and the raw material costs of aluminum are surging. Since most of the printing plates are made of aluminum, the printing plates are vulnerable to fluctuations in raw material costs of aluminum. The surging raw material costs of aluminum also affect a recycle price of used aluminum. Depending on the recycle price of the used aluminum, a user decides whether to take the used printing plates to a recycling dealer. As a result, the recycle price becomes unstable, making it difficult to steadily collect the used printing plates as the raw material of the substrates for the printing plates.

### SUMMARY OF THE INVENTION

An object of the present invention is to provide a collection method, a collection system, a recycling method and a collection container for collecting the used printing plates efficiently and reliably.

In order to achieve the above objects and other objects, a collection method of the present invention includes the steps of claim 1.

It is preferred that the reusability judging step includes the following steps: registering the ID information of the substrate with an ID information registering section before collecting the used printing plate; matching between the registered ID information and the ID information read from the used printing plate; and judging the used printing plate to be reusable when the read ID information matches the registered ID information, and judging the used printing plate not to be reusable when the read ID information does not match the registered ID information or when the ID information is unreadable.

In a preferred embodiment of the present invention, the used printing plates are collected on a per box basis, and the reusability judging step further includes the following steps: counting the number of the used printing plates judged to be reused as a reusable number; counting the number of the collected used printing plates on the per box basis as a collected number; calculating a percentage of aluminum content of the collected used printing plates on the per box basis based on the collected number and the reusable number; and judging the used printing plates on the per box basis to be reusable when the percentage of the aluminum content on the per box basis is equal to or above a predetermined value, and judging the used printing plates on the per box basis not to be reusable when the percentage of aluminum content on the per box basis is below the predetermined value.

It is preferred that the reusability judging step includes the following steps: registering the ID information provided to the substrate, a percentage of aluminum content and a weight of a printing plate corresponding to the ID information, and a percentage of aluminum content and a weight of a printing plate having unreadable ID information with an ID information registering section, before the used printing plates are collected; reading the percentage of aluminum content and the weight from the ID information registering section based on the ID information read from the used printing plate every time the used printing plate is collected; calculating a percentage of aluminum content on the per box basis based on the read percentage of aluminum content and the read weight; and judging the used printing plates on the per box basis to be reusable when the percentage of aluminum content on the per box basis is equal to or above a predetermined value, and judging the used printing plates on the per box basis not to be reusable when the percentage of aluminum content on the per box basis is below the predetermined value.

In addition to the above, it is preferred to register with the ID information registering section a percentage of impurity content of the printing plate corresponding to the ID information and a percentage of impurity content of the printing plate with unreadable ID information. The percentage of impurity content is read from the ID information registering section based on the ID information, and the percentage of impurity content on the per box basis is calculated based on the read percentage of impurity content and the read weight. It is preferred that the used printing plates on the per box basis are judged to be reusable when the percentage of aluminum content on the per box basis is equal to or above a predetermined value and the percentage of impurity content on the per box basis is below a predetermined limit, and judging the used printing plates on the per box basis not to be reusable when the percentage of aluminum content on the per box basis is below the predetermined value and the percentage of impurity content on the per box basis is equal to or above the predetermined limit.

It is preferred to determine a recycle price of the used printing plates on the per box basis judged to be reusable as a first recycle price, and determine a recycle price of the used printing plates on the per box basis judged not to be reusable as a second recycle price lower than the first recycle price.

It is preferred that the ID information is stored in an information carrier fixed to the used printing plate. It is preferred that the information carrier is an IC tag, and in the information reading step, the ID information is read from the IC tag using an IC tag reader. It is preferred that the IC tag further stores information used for management of printing, management of the printing plates, and management of inks and printing media.

A recycling method of the present invention includes the steps of the method of claim 1 and recycling the used printing plate judged to be reusable.

It is preferred that the recycling step further includes the following steps: packing the used printing plates judged to be reused in a bundle; producing a recycled ingot by melting and casting the used printing plates at least on the per box basis; analyzing a composition of the recycled ingot; and judging whether the recycled ingot has a necessary percentage of aluminum content to be reusable as a raw material for the substrate based on the composition analysis. It is preferred that the substrate is produced by rolling the recycled ingot judged to be reusable.

A collection system for the present invention includes the features of claim 14.

It is preferred that the IC tag fixed to the printing plate has a first storage area and a second storage area, and the first storage area stores the ID information used for judging whether the used printing plate is to be reused, and the second storage area stores management information used for the management of the printing plates, the management of printing, and the management of inks and printing media.

A collection container of the present invention includes a container body for containing the used printing plates, an ID information reading unit that is attached to the container body and reads the ID information from the used printing plate when the used printing plate is put in the container body, and a reusability judgment unit for judging whether to reuse the used printing plate as a raw material for the substrate based on the read ID information.

It is preferred that the reusability judgment unit includes an ID information registering section that registers the ID information provided to the substrate, a matching section for matching between the registered ID information and the ID information read from the used printing plate, and a first judgment section. The first judgment section judges that the used printing plate is to be reused when the read ID information matches the registered ID information, and that the used printing plate is not to be reused when the read ID information does not match the registered ID information or when the ID information is unreadable.

In a preferred embodiment of the present invention, the reusability judgment unit further includes a reusable printing plate counting section, a collected printing plate counting section, an aluminum content calculating section, and a second judgment section. The reusable printing plate counting section counts the number of the used printing plates judged to be reusable as a reusable number, among the used printing plates contained in the container body. The collected printing plate counting section counts the total number of the used printing plates collected in the container body as a collected number. The aluminum content calculating section calculates a percentage of aluminum content of the used printing plates on the per collection container basis based on the collected number and the reusable number. The second judgment section judges that the used printing plates on the per collection container basis are to be reused when the percentage of aluminum content is equal to or above a predetermined value, and that the used printing plates on the per collection container basis are not to be reused when the percentage of aluminum content is below the predetermined value.

It is preferred that the reusability judgment unit further includes an ID information registering section, an aluminum content and a weight reading section, and the second judgment section. It is preferred that the ID information registering section registers the ID information provided to the substrate, a percentage of aluminum content and a weight of a printing plate corresponding to the ID information, and a percentage of aluminum content and a weight of a printing plate having unreadable ID information. It is preferred that the aluminum content and a weight reading section reads the percentage of aluminum content and the weight from the ID information registering section based on the ID information read from the used printing plate every time the used printing plate is put in the container body. It is preferred that the aluminum content calculating section calculates a percentage of aluminum content of the used printing plates on the per collection container basis based on the read percentage of aluminum content and the read weight of each of the printing plates. It is preferred that the second judgment section judges the used printing plates on the per collection container basis to be reusable when the percentage of aluminum content on the per collection container basis is equal to or above a predetermined value, and judges the used printing plates on the per collection container basis not to be reusable when the percentage of aluminum content on the per collection container basis is below the predetermined value.

In addition to the above, it is preferred that the reusability judgment unit includes an impurity content calculating section. It is preferred that the ID information registering section registers a percentage of impurity content of the printing plate corresponding to the ID information and a percentage of impurity content of the printing plate with unreadable ID information. The percentage of impurity content is read by the content and the weight reading section based on the ID information, and the percentage of impurity content on the per collection container basis is calculated on the read percentage of impurity content and the read weight by the impurity content calculating section. It is preferred that the second judgment section judges that the used printing plates on the per collection container basis are to be reused when the percentage of aluminum content on the per collection container basis is equal to or above a predetermined value and the percentage of impurity content on the per collection container basis is below a predetermined limit, and judges the used printing plates on the per collection container basis not to be reused when the percentage of aluminum content on the per collection container basis is below the predetermined value and the percentage of impurity content on the collection container basis is equal to or above the predetermined limit.

According to the present invention, the ID information is read from the used printing plates, and whether the used printing plate is reused for producing the substrate of a printing plate is judged based on the read ID information. The used printing plate judged to be reused is recycled as an aluminum raw material for the substrate of the printing plate. Thus, the used printing plates having high-purity aluminum is reliably collected and the recycling efficiency is improved. In addition, the used printing plates of uniform aluminum content are collected and recycled for production of the printing plates having approximately equivalent composition to the used printing plates. Thus, aluminum resources, namely the substrates of the used printing plates, are efficiently utilized

Whether or not the percentage of aluminum content of the used printing plates exceeds the predetermined value is judged on the per box basis. Thus, the used printing plates are efficiently recycled by making re-sorting operations unnecessary.

Since the prices of the used printing plates are determined based on reusability of the used printing plates, not on the market price of aluminum, appropriate recycle prices are set. As a result, the used printing plates are steadily collected.

### BRIEF DESCRIPTION OF THE DRAWINGS

The above and other subjects and advantages of the present invention will become apparent from the following detailed description of the preferred embodiments when read in association with the accompanying drawings, which are given by way of illustration only and thus are not limiting the present invention. In the drawings, like reference numerals designate like or corresponding parts throughout the several views, and wherein:
Fig. 1 is a schematic view of a producing line, a printing equipment, and a recycling line of lithography printing plates.
Fig. 2A is a schematic view of an internal configuration of a reception device of collected used printing plates;
Fig. 2B is a front view of the reception device of the collected used printing plates; and
Fig. 3 is a flowchart showing steps for collecting the used printing plates.

### DESCRIPTION OF THE PREFERRED EMBODIMENTS

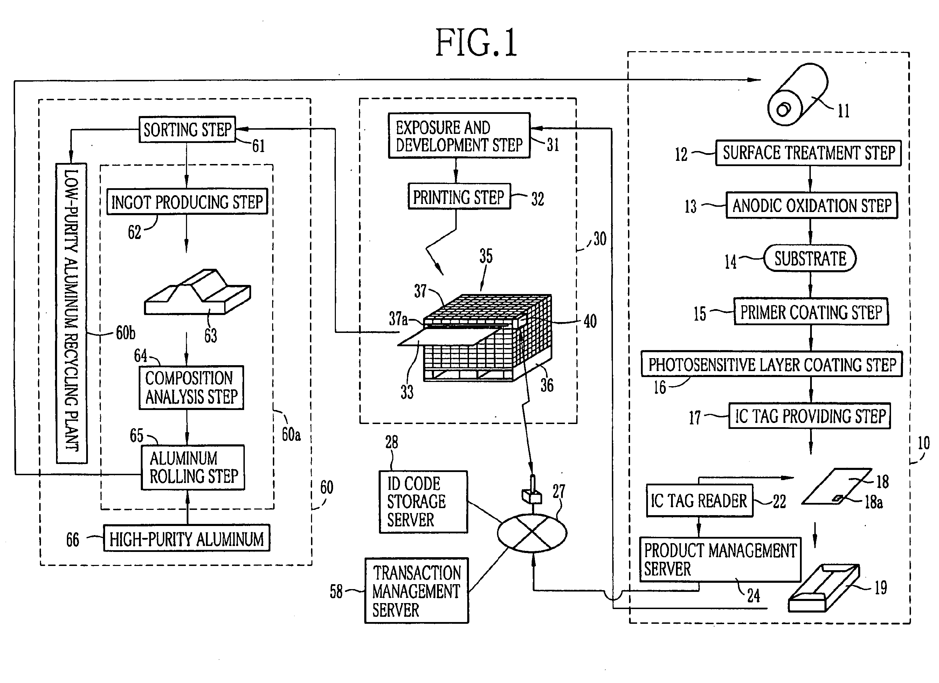

As shown in Fig. 1, in a lithography printing plate producing line 10, surface treatment and anodic oxidation are performed to an aluminum strip 11 made of an aluminum alloy in a surface treatment step 12 and an anodic oxidation step 13 respectively. Thereby, a substrate 14 for a lithography printing plate is produced. When necessary, a primer coating is applied to the substrate 14 in a primer coating step 15, and a photosensitive layer is applied to the substrate 14 in a photosensitive layer coating step 16. Thereby, an original printing plate for lithography is produced. The original printing plate is cut at a predetermined length to be a printing plate 18. Thereafter, an IC tag providing step 17 is performed. The printing plates 18 are packed in packs 19, each containing the predetermined number of the printing plates 18.

In the IC tag providing step 17, an IC tag 18a is adhered with an adhesive sticker to an area of the printing plate 18 outside the photosensitive layer, or an area of the photosensitive layer not used for printing, for example, an edge or a rim of the printing plate 18. As is well known, an ID code is stored in a built-in memory of the IC tag 18a. The ID code is read with an IC tag reader 22 through radio waves or electromagnetic waves. In this embodiment, the IC tag 18a is very small, and does not need a battery. Power is supplied wirelessly to the IC tag 18a from an antenna on the IC tag reader 22.

The IC tag 18a can be fixed to the printing plate 18 in other methods. For example, a concave portion may be formed on an edge of the printing plate 18 so as to embed the IC tag 18a therein. Additionally, it is preferable to render the IC tag 18a nondetachable once it is fixed, so as to prevent the IC tag 18a from being attached to a printing plate of another model or another maker. It is preferable to render the IC tag 18a unreadable with the IC tag reader 22 in case the IC tag is detached from the printing plate 18. It is preferable to render the IC tag 18a unreadable with the IC tag readers other than the IC tag reader 22 in the lithography printing plate producing line 10 and an IC tag reader 42 of a reception device 40 of collected used printing plates 33. The reception device 40 is installed in the vicinity of a printing equipment 30.

Prior to or at the shipment, the ID code of the printing plate 18 is read with the IC tag reader 22, and the read ID code is associated with specification information of the printing plate 18. The ID code and the associated specification information are stored in a product management server 24. The specification information of the printing plate 18 includes a type, a size, the percentage of aluminum content in the substrate 14, the percentages of impurity contents in the printing plate 18, the weight, the maker name, the product name and a lot number. In the case the IC tag 18a has a large memory capacity, such specification information can also be stored in the IC tag 18a together with the ID code, and the specification information can be written in the IC tag 18a before or after the IC tag 18a is fixed to the printing plate 18.

In the case the ID code of the IC tag 18a is previously known, the specification information can be stored in association with the ID code in the product management server 24 without reading the ID code from the IC tag 18a. In the case the ID code is not stored in the IC tag 18a, the ID code is written in the IC tag 18a using an IC tag writer (not shown) before or after the IC tag 18a is fixed to the substrate 14.

The ID code and the corresponding specification information stored in the product management server 24 are stored in an ID code storage server 28 through a network 27.

The packs 19 are supplied to the newspaper companies, publishing companies, and printing companies directly from the maker of the printing plates or through a dealer. For example, in the printing equipment 30 of a printing company, an exposure and development step 31 is performed to the printing plate 18, and thus the printing plate is produced. The produced printing plate is attached to a rotary press, and a printing step 32 is performed. After the printing, a used printing plate 33 is discarded in a collection container 35.

The collection container 35 is constituted of a pallet 36 and a metal mesh box 37 on the pallet 36. The pallet 36 is a bottom board of the collection container 35. The metal mesh box 37 is removably attached to the pallet 36. The metal mesh box 37 has a slot 37a through which the used printing plate 33 is put. The reception device 40 is provided close to the slot 37a.

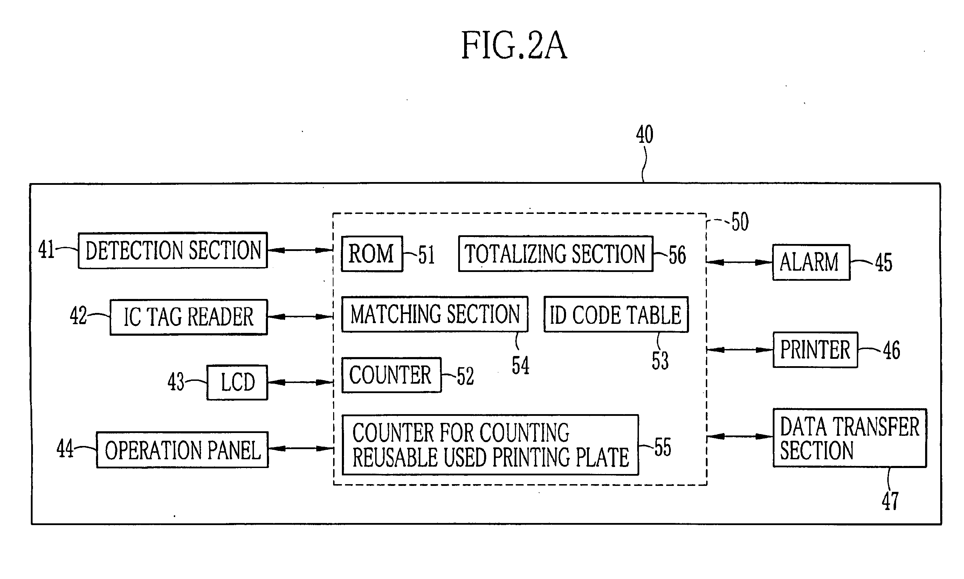

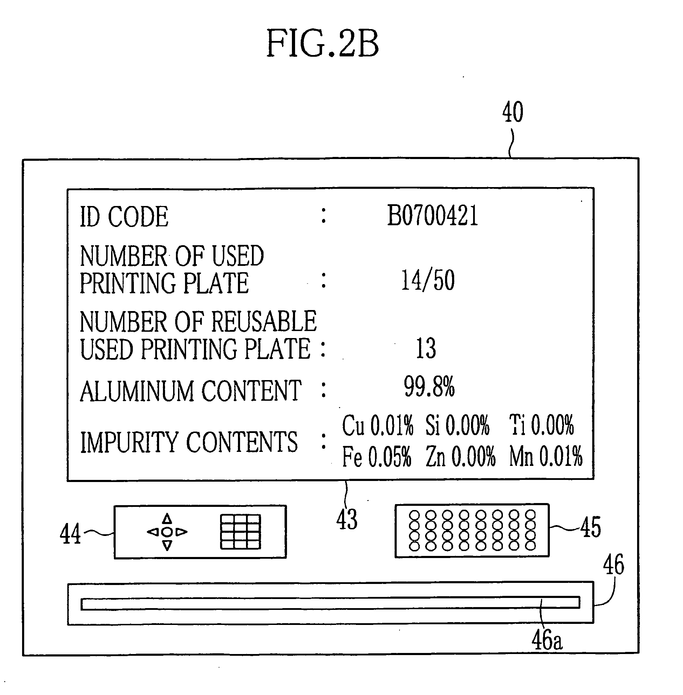

As shown in Fig. 2A, the reception device 40 includes a detection section 41, an IC tag reader 42, an LCD 43, an operation panel 44, an alarm 45, a printer 46, a data transfer section 47, and a controller 50 connecting to each of them. The data transfer section 47 is connected wirelessly to the network 27. As shown in Fig. 2B, the reception device 40 is provided with the LCD 43, the operation panel 44, the alarm 45, and a print paper exit 46a on its front face.

The controller 50 has a ROM 51. In the ROM 51, the program to execute the following processing is stored: a number counting processing for counting the number of the used printing plate 33 put in the collection container 35; a first judgment processing for judging whether the used printing plate 33 put in the collection container 35 is reusable; a reusable printing plate counting processing for counting the number of reusable used printing plate 33; an aluminum content calculating processing for calculating the percentage of the aluminum content in the used printing plates 33 on a per collection container basis (on a per box basis), an impurity content calculating processing for calculating the percentage of each impurity content in the used printing plates 33 on the per collection container basis; a second judgment processing for judging whether the percentage of the aluminum content is equal to or above a criterion on the per collection container basis after the predetermined number of the used printing plates 33 are put in the collection container 35; and after the second judgment processing, a third judgment processing for judging whether the percentage of each impurity content is below a limit on the per collection container basis, and judging reusability of the used printing plates 33 based on the judgment of the impurity contents on the per collection container basis. In addition, the ROM 51a has a program for calculating a recycle price of the used printing plates 33 on the per collection container basis after the second judgment processing. The reusability of the used printing plates 33 can be judged based on the percentage of the aluminum content alone without calculating the percentages of the impurity contents in the used printing plates 33.

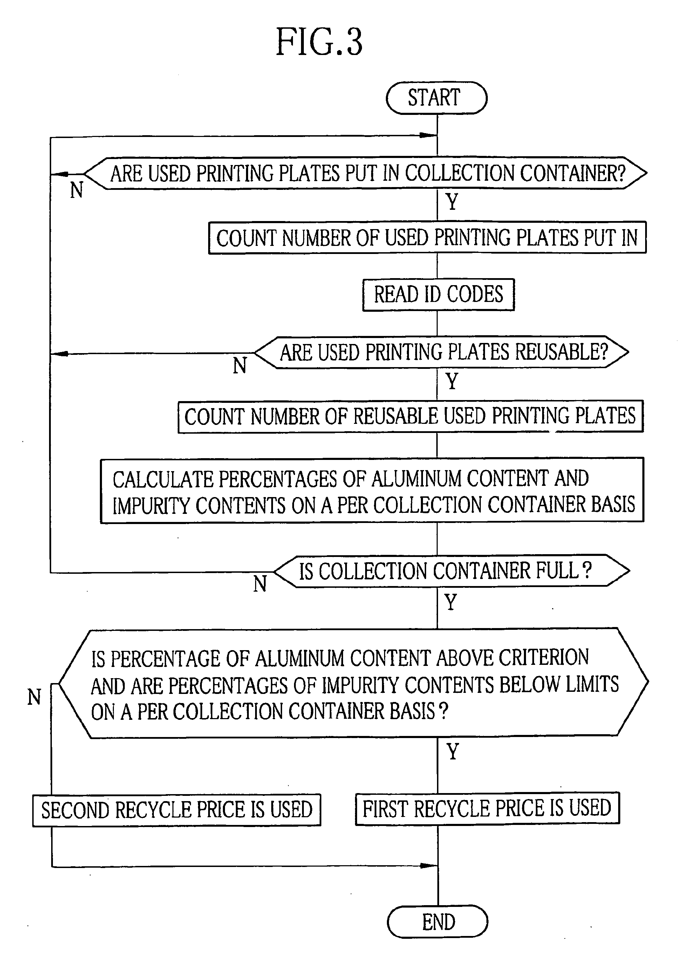

Hereinafter, a collection method of the used printing plates 33 is described while referring to Figs. 2A and 2B, and a flowchart in Fig. 3. The detection section 41 transmits a detection signal to the controller 50 upon detecting that the used printing plate 33 is put through the slot 37a. A counter 52 is provided in the controller 50. The counter 52 counts the number of the used printing plates 33 put through the slot 37a based on the detection signals. The counted number is displayed on the LCD 43. The IC tag reader 42 reads the ID code from the IC tag 18a of the used printing plate 33 passing through the slot 37a. The read ID code is sent to the controller 50.

Whether the read ID code matches one of a plurality of ID codes stored in an ID code table 53 in the controller 50 is judged by a matching section 54. In the case the read ID code matches the ID code in the ID code table 53, the used printing plate 33 is judged reusable. The ID codes in the ID code table 53 are synchronized with those in the ID code storage server 28 through the data transfer section 47 at predetermined time intervals. Thus, the ID codes in the ID code table 53 are constantly updated to the latest data.

In the case the used printing plate 33 is judged reusable, a counter 55 for counting the reusable used printing plates increments by one. The number of the reusable printing plates is displayed on the LCD 43.

Using the read ID code, the percentage of the aluminum content and the percentages of the impurity contents of the used printing plate 33 at this point are calculated on the per collection container 35 basis. In the ID code table 53, ID codes each of which is associated with the percentage of the aluminum content, the percentages of the impurity contents, and the weight of the printing plate 18 are stored. Six kinds of impurities are contained in the substrate 14 of the printing plate 18, namely, Cu, Si, Ti, Fe, Zn, and Mn. The number of kinds of the impurities is not limited to the above. The percentages of the impurity contents in the used printing plate 33 are influenced by metals contained in coatings and inks adhered to the used printing plate 33, for example, cupper contained in a cyan ink. In this embodiment, however, the influence of such metals contained in the coatings and the like are not considered.

There may be cases where the used printing plate having an unreadable ID code or not having the ID code (hereinafter referred to as the used printing plate without the readable ID code) is put in the collection container 35. The ID code table 53 also includes the percentage of the aluminum content and the percentages of the impurity contents of the average low-purity aluminum product, and the weight of an average printing plate, so as to treat the used printing plate without the readable ID code as the low-purity aluminum product, for example, an aluminum can.

The percentage of the aluminum content and the weight of the printing plate corresponding to the read ID code are retrieved from the ID code table 53, and the percentage of the aluminum content is multiplied by the weight. Thus, the amount of aluminum contained in the used printing plate 33 is calculated. The percentages of the impurity contents and the weight of the printing plate corresponding to the read ID code are retrieved from the ID code table 53, and each percentage of the impurity contents is multiplied by the weight. Thus, the amounts of impurities contained in the used printing plate 33 are calculated.

Likewise, in the case the ID code is unreadable, the amount of aluminum is calculated by multiplying the percentage of the aluminum content of the low-purity aluminum product stored in the ID code table 53 by the weight of the average printing plate stored in the ID code table 53. The amounts of impurities are calculated by multiplying each percentage of the impurity contents of the low-purity aluminum product stored in the ID code table 53 by the weight of the average printing plate stored in the ID code table 53.

The amounts of aluminum, the amounts of the impurities, and the weights of the used printing plates are totalized respectively in a totalizing section 56 to obtain the total amount of aluminum, the total amount of the impurities, and the total weight of the used printing plates at this point. The percentage of the aluminum content on the per collection container 35 basis at this point is calculated by dividing the total amount of aluminum content at this point by the total weight at this point. The percentage of each impurity content on the per collection container 35 basis at this point is calculated by dividing the total amount of each kind of impurity at this point by the total weight at this point. The percentage of the aluminum content and the percentages of the impurity contents on the per collection container 35 basis are displayed on the LCD 43.

When the total number of the collected used printing plates reaches the maximum allowable number of the collection container 35, the controller 50 issues the alarm 45 to inform the user that the collection container 35 is full. In the case the percentage of the aluminum content on the per collection container 35 basis is equal to or above the criterion and the percentages of the impurity contents in each collected used printing plate is below the limit, the used printing plates 33 are judged reusable on the per collection container basis. For example, the limits of the percentages of impurity contents can be within the following range: for Cu 0.08% or less, for Si 0.185% or less, for Ti 0.08% or less, for Fe 0.7% or less, for Zn 0.05% or less, and for Mn 0.05% or less. In the case the used printing plates 33 are judged reusable, the price of the used printing plates 33 on the per collection container basis is determined as a first recycle price. The first recycle price is set higher than the recycle price of the used aluminum cans.

On the other hand, the percentage of the aluminum content is below the criterion or a percentage of one of the impurity contents is equal to or above the limit on the per collection container basis, the used printing plates 33 are judged unreusable on the per collection container 35 basis. In this case, the price of the used printing plates 33 is determined as a second recycle price that is lower than the first recycle price.

Once the recycle price of the collected used printing plates 33 is determined, collection data including the ID code, the total number of the used printing plates, the number of the reusable printing plates, the percentage of the aluminum content, the result of the judgment for reusability, and the recycle price is written in a transaction management server 58 through the data transfer section 47. A label on which the collection data is printed is ejected from the print paper exit 46a. The label states whether the used printing plates 33 are "reusable" or "not reusable". The metal mesh box 37 is removed off from the collection container 35, and the used printing plates 33 and the pallet 36 are tied with metal ties or the like. Then, the above-described label is attached to the pallet 36, and the pallet 36 is sent to a recycling line 60 (see Fig. 1).

As shown in Fig. 1, in the recycling line 60, a sorting step 61 of the used printing plates 33 is performed first. In the sorting step 61, the used printing plates 33 tied to the pallets 36 are sorted according to the label put on the pallet 36. The pallets 36 labeled "reusable" are sent to an aluminum substrate recycling plant 60a in which the used printing plates 33 are reused as a raw material of aluminum for producing substrates 14 of the printing plates 18. The pallets 36 labeled "unreusable" and those without the labels are sent to a common low-purity aluminum recycling plant 60b.

In the aluminum substrate recycling plant 60a, an ingot producing step 62 is performed. In the ingot producing step 62, the used printing plates 33 are melted in a melting furnace (not shown) on a per pallet 36 basis. Thereafter, the melted used printing plates 33 are cast into a recycled ingot 63.

Some of the recycled ingots 63 are randomly picked up, and a spot check is performed in the composition analysis step 64. In the spot check, the percentage of the aluminum content of the recycled ingots 63 is measured using a composition analysis device (not shown) such as an optical emission spectrometer. Based on the detected results, in the case the recycled ingots 63 has the percentage of the aluminum content reusable for the raw material of the substrate 14 for the printing plates 18, the recycled ingots 63 are sent to an aluminum rolling step 65. An amount of money equivalent to the first recycle price stored in the transaction management server 58 is paid to the printing company for the used printing plates 33.

On the other hand, the recycled ingots 63 with the percentage of the aluminum content unreusable for the raw material of the substrate 14 for the printing plates 18 are sent to the common low-purity aluminum recycling plant 60b. An amount of money equivalent to the second recycle price stored in the transaction management server 58 is paid to the printing company for the used printing plates 33.

In the aluminum rolling step 65, the recycled ingot 63 and high-purity aluminum 66 with the percentage of aluminum content of at least 99.7 mass% are melted and mixed, and then cast into a slab that is easy to be rolled. The slab is rolled, and thus the aluminum strip 11 that is formed into the substrate 14 for the printing plate 18 is produced. The aluminum strip 11 is sent to the lithography printing plate producing line 10 and recycled as the substrate 14 for the printing plate 18. In the aluminum rolling step, the slab can be produced by melting the recycled ingot 63 alone without adding high purity aluminum.

In this embodiment, the IC tag 18a in which the ID code is stored is fixed to the printing plate 18, and the ID code of the collected used printing plate 33 is read with the IC tag reader 42. However, the form of the ID code is not limited to the above.

For example, instead of storing the ID code in the IC tag or the like as an electronic data, a visible ID code, for example, a bar code, can be directly fixed to the printing plate 18. In this case, the bar code on the collected used printing plate 33 is read with a bar code reader (not shown). Instead, letters and marks (hereinafter referred to as ID letters) indicating the maker name, the logo of the maker, the date of manufacture, and the type of the product can be provided to the printing plate 18. An image of the ID letters on the used printing plate 33 is captured using a camera, and image processing such as pattern recognition is performed to the captured image, and thus the ID letters are read based on the result of the image processing.

The above described bar code or the ID letters can be preferably provided to an area outside the photosensitive layer or an area of the photosensitive layer not used for printing, for example, an edge or a rim of the printing plate, in the case the photosensitive layer is applied to both surfaces of the printing plate. In the case the photosensitive layer is applied to one surface of the printing plate, it is preferable to put the bar code or the ID letters on the surface on which the photosensitive layer is not provided. It is preferable to make the bar codes and the ID letters inerasable once they are provided on the printing plate.

Methods to provide the bar codes and the ID letters include, for example, a laser marker method using a laser marker, an ink jet method using an ink jet printer for printing, chemical electric processing, and an etching method in which etching is provided by edging. Additionally, a dot printing method, an inscription method in which micro letters, which are not visible to the naked eye, are engraved on the surface of the printing plate by an engraving head such as a notch or abrasion mark, and a stamp method using an oil-based ink stamp.

In the ink jet method, the bar codes and the ID letters are printed using an ink jet printer. It is preferable to form a coating layer containing metal oxides, an organic polymer compound, and a plasticizer over the printed area. Thereby, the printed area is protected, and resistant to erasure. In the etching method, it is preferable to attach an insulation masking layer having a through hole to the printing plate and perform the etching on the printing plate with the insulation masking layer. The insulation layer is formed in accordance with the shape of the bar code or the ID letters. It is preferable to provide the ID letters each of which has the depth of at most 10 µm and the diameter of at most 50 µm by the etching method. In the stamp method using oil-based inks, it is preferable to'stamp the bar codes and the ID letters after using a plate cleaner or after the development step.

In this embodiment, the IC tag 18a is fixed to the printing plate 18 after the photosensitive layer is applied to the printing plate 18 and before the printing plates 18 are packed in the pack 19. The timing of fixing the IC tag 18a or the like is not limited to the above. The IC tag 18a, the bar code, or the ID letters can be fixed to the printing plate 18 at the time of surface treatment, or after the aluminum strip 11 is cut into a predetermined size.

In this embodiment, the IC tag 18a is fixed to each printing plate 18 prior to or at the shipment. Alternatively, label sheets with IC tags or those printed with the ID letters can be shipped together with the packs 19, without fixing the labels sheets on the printing plates 18. The label sheet can be fixed to each of the used printing plates 33 when the used printing plates 33 are collected from the printing equipment 30, and the used printing plates 33 of the same type can be collected together.

In this embodiment, the IC tag 18a is fixed to each printing plate 18. Alternatively, the label sheet with the IC tag each having the ID code or the label sheet printed with the ID letters can be fixed to each pack 19 of the printing plates 18 at the shipment.

In this embodiment, the IC tags 18a are fixed to the printing plates 18 in the lithography printing plate producing line 10 in which the printing plates 18 are produced. Alternatively, the IC tags 18a or ID letters can be provided to the printing plates 18 in the printing equipment 30 to which the printing plates 18 are shipped. In this case, the label sheets with the IC tags, the bar codes, or the ID letters can be fixed to the printing plates 18 in the printing equipment 30. Alternatively, the ID codes or the ID letters can be printed on the printing plate 18 using a plate-making device (not shown). Similar to the above-described lithography printing plate producing lime 10, the bar codes and the ID letters are fixed to the printing plates 18 by the plate-making device using the laser marker method, the ink jet method, the etching method, the dot printing method, the imprinting method and the stamping method as described above.

In this embodiment, the ID code fixed to the printing plate 18 is used for judging whether the used printing plate 33 is reusable or not. However, the usage of the ID code is not limited to the above. For example, in the case repeatedly reusable printing plates are used in the printing equipment, a printing plate condition management unit is provided. The printing plate condition management unit determines, from the ID code, degradation of the printing plate with time. The ID codes of the printing plates and the printing plate condition management unit are used for monitoring the condition of the printing plates, for example, to determine the time to exchange the printing plates.

In the case a CTP (computer to plate) device, which forms the image directly on the printing plate based on digital image data, is used in the printing equipment, the ID code is printed on the printing plate concurrently with the image by the CTP device instead of providing the ID code to the printing plate in the lithography printing plate producing line 10. The ID code can be read by the printing device (not shown), and the printing can be controlled based on the read ID code.

Additionally, printing plate management information such as document names and edition numbers, ink management information such as ink maker names, ink properties, colors and quantities, and printing paper management information such as surface treatment, the number of sheets to be printed, the size and the thickness of the printing papers can be stored in the IC tags of the printing plates to control the printing plates, the inks, and the printing papers.

In this embodiment, only the ID code is stored in the IC tag 18a. In addition to the ID code, other information can also be stored in the IC tag 18a. In this case, the IC tag has a first storage area and a second storage area. The first storage area is a write-once area in which rewriting of information is prohibited. On the other hand, the second storage area allows rewriting for at least one time. In the first storage area, information specific to the printing plate such as the ID code and specification information are stored. In the second storage area, the above described information related to printing in the printing equipment, namely, deterioration of the printing plate with time, the image to be formed by the CTP device, the printing plate management information, the ink management information and the printing paper management information are stored.

Since multiple rewriting is prohibited in the first storage area, the ID code and the specification information are protected between the shipment and the collection of the used printing plate 33. Thereby, whether the used printing plate 33 is reusable is judged reliably. Since the second storage area which can be used for the management of the printing plates is provided in addition to the first storage area, the range of uses for the IC tag is increased other than judging whether the used printing plate 33 is reusable or not.

In this embodiment, the collection container 35 is provided in the printing equipment 30, and the reception device 40 is installed on the collection container 35. This reception device 40 judges whether the used printing plate 33 in the collection container 35 is reusable for the raw material of the substrate 14. Alternatively, the reusability of the used printing plates 33 can be judged in the recycling line 60.

In this embodiment, the reusability of the used printing plates 33 is judged based on the ID code read by the IC tag reader 42. However, the use of the ID code is not limited to the above. The type, the maker name and the like of the used printing plate 33 can be identified by the ID code, and the used printing plates 33 can be sorted according to the identified type, the maker or the like.

In this embodiment, each printing plate 18 has a unique ID code. However, the ID codes are not limited to the above. Any ID codes can be used as long as the percentage of the aluminum content in the substrate of the used printing plate 33 can be identified. For example, a product ID provided per lot (batch), an ID code indicating a type of the aluminum substrate or the like can be used. In addition, in the case the aluminum market price is reflected to the recycle price for the used printing plate 33, the date of manufacture of the printing plate 18 can be included in the ID code.

In this embodiment, reusability of the used printing plate 33 is judged based on the ID information read by the IC tag reader 42. However, the forms of the ID information are not limited to the above. For example, a recycle ticket is issued at the time of selling the printing plates 18 so as to collect the used printing plates 33 with the recycle ticket. In this case, the reusability of the used printing plates 33 is judged by the presence of the recycle ticket. The recycle ticket can be attached to the used printing plates 33 on the per collection container basis, or to each used printing plate 33.

In this embodiment, the used printing plates 33 are collected using the collection container 35 having the pallet 36 and the metal mesh box 37. Containers used for collecting the used printing plates 33 are not limited to the above. The used printing plates 33 can be collected using the pallets 36 alone or the metal mesh boxes 37 alone. To collect a large quantity of the used printing plates 33, a container of a large capacity can be used. Manuals for sorting the used printing plates 33 can be distributed to the users so that the users can sort the used printing plates 33 according to the manual. The manual describes the types of the printing plates and how they are sorted for reusing. In addition, the used printing plates 33 can be sorted according to types by using plural collection containers distinguished according to the types or the aluminum composition of the printing plates. Such collection containers can be leased to the users.

In this embodiment, the percentage of the aluminum content is calculated based on the totalized amount of aluminum and the total weight of the used printing plates 33 on the per collection container basis. However, the method for calculating the percentage of the aluminum content is not limited to the above. For example, the percentage of the aluminum content on the per collection container basis can be obtained based on a recycle rate that is calculated based on the number of the collected used printing plates 33 and the number of the reusable used printing plates. Alternatively, the amount of aluminum and the weight for each printing plate 18 are stored in the ID code table 53 instead of the percentage of the aluminum content, and the amounts of aluminum and the weights can be individually totalized each time the used printing plate 33 is put in the collection container 35. Thus, the percentage of the aluminum content on the per collection container basis is also calculated.

In this embodiment, the first recycle price that is not affected by the changes in the aluminum cost price is used for the recycle price of the reusable used printing plates. Alternatively, more specific recycle price can be used. For example, a price of the substrate for the printing plate on the first selling date, a price determined with the consent of the user, or the like can also be the recycle price.

In addition, points corresponding to the type, the sales quantity, or the like of the printing plates 18 can be provided to the user at the sale of the printing plates 18. At the time of collecting the used printing plates 33, the recycle price can be determined according to the points. By providing the points as a measure of the recycle price, collection of the used printing plates 33 is promoted.

Additionally, an IC tag can be provided to each of the collection container 35. In the IC tag, sales information such as the type and the sales quantity of the printing plates 18 is stored at the sale of the printing plates 18. Then, at the collection of the used printing plates 33, the sales information in the IC tag 18a and the information of the used printing plates 33 in the collection container 35 are matched, and the recycle price can be calculated based on the result of the matching.

In this embodiment, the used printing plate 33 put in the collection container 35 is judged unreusable in the case the ID code does not match or is unreadable. The used printing plate 33 can be judged unreusable for other reasons, for example, the aluminum composition of the used printing plate 33 is uncertain, the aluminum composition of the used printing plate 33 is not appropriate for reusing, adhesion of foreign substances to the used printing plate 33 due to improper handling of the user or during storage, and the like.

In this embodiment, the used printing plates 33 are judged reusable on the per collection container basis in the case the percentage of the aluminum content on the per collection container basis is equal to or above the criterion, and all of the percentages of the impurity contents on the per collection container basis are below the limits. Alternatively, the used printing plates 33 can be judged reusable on the per collection container basis in the case the used printing plates 33 satisfy one of the percentage of the aluminum content and the percentages of the impurity contents.

In this embodiment, all of the used printing plates 33 in the collection container 35 are judged unreusable in the case the percentage of one of the impurity contents is equal to or above the limit. However, the judgment is not limited to the above. For example, in the case the percentage of only one of the impurity contents is equal to or above the limit, the used printing plate 33 is not judged for reusability, but judged in the recycling line 60 whether the used printing plate 33 can be cast into an ingot. Once the used printing plate 33 is judged to be cast into an ingot, the used printing plate 33 is cast into an impurity-containing ingot in the recycling line 60. Then, the reusable recycled ingot 63 and the impurity-containing ingot are melted and mixed, and then cast into a combined ingot. The percentage of the impurity content equal to or above the limit is reduced below the limit by making the combined ingot or repeating the steps for making the combined ingot for plural times. Thus, the impurity-containing ingot is effectively utilized in combination with the recycled ingot 63 to produce the combined ingot.

In this embodiment, the used printing plate without the readable ID code is treated as the low-purity aluminum product such as the aluminum can. The percentage of the aluminum content and the percentages of the impurity contents of such used printing plates on the per collection container basis are calculated using the percentage of the aluminum content and the percentages of the impurity contents of the average low-purity aluminum product, and the weight of the average printing plate. Calculating methods of the percentage of the aluminum content and the percentages of the impurity contents of the used printing plates without the readable ID codes are not limited to the above. For example, the used printing plate without the readable ID code can be removed from the collection container 35, and the percentage of the aluminum content and the percentages of the impurity contents of the removed used printing plate can be measured by a composition analysis device. The measurement results can be reflected in the calculation of the percentage of the aluminum content and the percentages of the impurity contents on the per collection container basis. In the case the used printing plates of different types, different compositions, different degrees of purity, and different makers are to be recycled, the used printing plate without the readable ID code is removed from the collection container 35. It is preferable to exactly specify the type, the composition, the degree of purity, and the maker name of the removed used printing plate.

The second recycle price, equivalent to the recycle price of the low-purity aluminum product such as the aluminum cans, is used as the recycle price of the unreusable used printing plates. In consideration of additional costs incurred by molten metal yield in re-melting, transportation fees, cleaning fees, and the like, the second recycle price can be reduced by subtracting the additional costs from the second recycle price.

In this embodiment, the used printing plates 33 are recycled at the predetermined recycle price. However, the recycle prices are not limited to the above. The recycle price can be changed as necessary according to aluminum market conditions, past business transactions, contract relations with the user, recycle yield and inspection yield of the used printing plates 33, and the like. It is preferable to provide a server in which a cost price of aluminum, a cost price of the printing plate 18, a price of the substrate 14 for the printing plate 18 and the data of past business transactions with the user are stored, in addition to the ID code storage server 28 and the transaction management server 58 of this embodiment. It is preferable to calculate the recycle price of the used printing plates 33 by coordinating information among these servers.

In this embodiment, the recycle price is determined for each deal (business transaction) of the used printing plates 33. It is also possible to determine the recycle price after plural deals. At the sale of the printing plates 18, the previous recycle price for the used printing plates 33 can be subtracted from the sales price of the printing plates 18 to determine an amount billed to the user. It is preferable that recycle costs such as transportation fees from the printing equipment 30 to the recycling line 60 (excluding those paid by the user), storage fees, ink removal fees, inspection fees for reusability, and fees for melting and casting are added to the amount billed. It is preferable to adjust the recycle price for the used printing plate 33 such that the sum of the amount billed and the recycle costs does not exceed the cost price of the substrate 14 for the printing plate 18. To stabilize the amount billed in each deal, it is preferable that the sales quantity of the printing plates 18 and the number of collected used printing plates 33 are equivalent for the same maker. At the collection, it is preferable to check that the used printing plates 33 being collected are the ones that the same maker sold in the past.

In this embodiment, a line for shipping the printing plates 18 (shipping line) and the recycling line 60 are located in different sites. Alternatively, the shipping line and the recycling line 60 can be located in the same site. In this case, the used printing plates 33 can be collected upon delivery of the printing plates 18, and thereby the emission of carbon dioxide from the delivery/collection vehicles is reduced.

In this embodiment, every used printing plate is accepted in the collection container 35. Then, the percentage of the aluminum content and the like are calculated, and the reusability of the printing plates is judged on the per collection container basis. However, the judgment of reusability is not limited to the above. For example, the ID code of the used printing plate 33 is read from the IC tag 18a when the used printing plate 33 is being put into the slot 37a of the collection container 35, and whether the used printing plate is reusable or not is judged. The alarm 45 can be issued to prohibit the used printing plate without the IC tag 18a or with unreadable ID code from entering the slot 37a. Such used printing plate can be pulled out from the slot 37a and put into a different collection container. Thus, only reusable printing plates can be collected by judging the reusability for each used printing plate upon entering the slot 37a. Accordingly, the judgment of reusability at the time the collection container 35 is full and the spot checks of the recycled ingots 63 are unnecessary.

In this embodiment, the reception device 40 is provided close to the slot 37a of the collection container 35. Alternatively, a hand-held reception device can be used. In this case, the ID code is read by the hand-held reception device before putting the used printing plate into the slot 37a so as to judge the reusability of the used printing plate.

In this embodiment, a system in which the printing plates are sold and then collected to be recycled is described. Alternatively, the present invention is applicable to a system in which substrates of the printing plates are on lease and only a license of the printing plates is offered to the user at cost. In this case, the ID code is fixed to the printing plate and reusability of the used printing plate is judged based on the ID code, and the printing plates are collected on the per collection container basis.

Various changes and modifications are possible in the present invention and may be understood to be within the present invention.

## Claims

1. A collection method for a used printing plate (33) having an aluminum substrate (14) provided with ID information, comprising the steps of:
(A) reading said ID information at the time of collecting said used printing plate; and
(B) judging whether to reuse said used printing plate as a raw material for said substrate based on said read ID information.

2. The collection method of claim 1, said step (B) including the steps of:
(b1) registering said ID information of said substrate with an ID information registering section (53) before collecting said used printing plate;
(b2) matching between said registered ID information and said ID information read from said used printing plate; and
(b3) judging to reuse said used printing plate when said read ID information matches said registered ID information, and judging not to reuse said used printing plate when said read ID information does not match said registered ID information or when said ID information is unreadable.

3. The collection method of claim 2, wherein said used printing plates are collected on a per box basis, and said step (B) further includes the steps of:
(b4) counting the number of said used printing plates judged to be reusable as a reusable number;
(b5) counting the number of said collected used printing plates on said per box basis as a collected number;
(b6) calculating a percentage of aluminum content of said collected used printing plates on said per box basis based on said collected number and said reusable number; and
(b7) judging to reuse said used printing plates on said per box basis when said percentage of said aluminum content is equal to or above a predetermined value, and judging not to reuse said used printing plates on said per box basis when said percentage of aluminum content is below said predetermined value.

4. The collection method of claim 1, wherein said used printing plates are collected on a per box basis, and said step (B) includes the steps of:
(b1) registering with an ID information registering section (53) said ID information provided to said substrate, a percentage of aluminum content and a weight of a printing plate corresponding to said ID information, and a percentage of aluminum content and a weight of a printing plate having unreadable ID information, before said used printing plates are collected;
(b2) reading said percentage of aluminum content and said weight from said ID information registering section based on said ID information read from said used printing plate every time said used printing plate being collected;
(b3) calculating a percentage of aluminum content on said per box basis based on said read percentage of aluminum content and said read weight; and
(b4) judging to reuse said used printing plates on said per box basis when said percentage of aluminum content on said per box basis is equal to or above a predetermined value, and judging not to reuse said used printing plates on said per box basis when said percentage of aluminum content on said per box basis is below said predetermined value.

5. The collection method of claim 1, wherein said used printing plates are collected on a per box basis, and said step (B) further includes the steps of:
(b1) registering with an ID information registering section (53) said ID information provided to said substrate, a percentage of aluminum content, a percentage of impurity content and a weight of a printing plate corresponding to said ID information, and a percentage of aluminum content, a percentage of an impurity content and a weight of a printing plate with unreadable ID information, before said used printing plates are collected;
(b2) reading said percentage of aluminum content, said percentage of impurity content and said weight from said ID information registering section based on said ID information read from said used printing plate every time said used printing plate being collected;
(b3) calculating a percentage of aluminum content on said per box basis based on said read percentage of aluminum content and said read weight;
(b4) calculating a percentage of impurity content on said per box basis based on said read percentage of impurity content and said read weight; and
(b5) judging to reuse said used printing plates on said per box basis when said percentage of aluminum content on said per box basis is equal to or above a predetermined value and said percentage of impurity content on said per box basis is below a predetermined limit, and judging not to reuse said used printing plates on said per box basis when said percentage of aluminum content on said per box basis is below said predetermined value and said percentage of impurity content on said per box basis is equal to or above said predetermined limit.

6. The collection method of claim 5 further including the step of:
(C) determining a recycle price of said used printing plates on said per box basis judged to be reusable as a first recycle price, and determining a recycle price of said used printing plates on said per box basis judged not to be reusable as a second recycle price lower than said first recycle price.

7. The collection method of claim 1, wherein said ID information is stored in an information carrier fixed to said used printing plate.

8. The collection method of claim 7, wherein said information carrier is an IC tag (18a), and in said step (A), said ID information is read from said IC tag using an IC tag reader (42).

9. The collection method of claim 8, wherein said IC tag further stores information used for management of printing, management of said printing plates, and management of inks and printing media.

10. A recycling method of used printing plates (33) having an aluminum substrate (14) provided with ID information, comprising the steps of the collection method of claim 1, and
(C) recycling said used printing plate judged to be reusable.

11. The recycling method of said claim 10, wherein said step (C) includes the steps of:
(c1) packing said used printing plates judged to be reusable. in a bundle;
(c2) producing a recycled ingot (63) by melting and casting said used printing plates at least on said per box basis;
(c3) analyzing a composition of said recycled ingot; and
(c4) judging whether said recycled ingot has necessary percentage of aluminum content to be reused as a raw material for said substrate based on said composition analysis in said step (c3).

12. The recycling method of claim 11, wherein said used printing plates are purchased at a first recycle price when said used printing plates are judged to be reusable in said step (c4), and said used printing plates are purchased at a second recycle price lower than said first price when said used printing plates are judged not to be reused in said step (c4).

13. The recycling method of claim 11, further including the step of:
(c5) producing said substrate by rolling said recycled ingot judged to be reusable in said step (c4).

14. A collection system for a used printing plate (33) having an aluminum substrate (14) provided with ID information, comprising:
an ID information reading unit (42) for reading said ID information from said used printing plate; and
a reusability judgment unit (50) for judging whether to reuse said used printing plate as a raw material for said substrate based on said read ID information.

15. The collection system of claim 14, wherein said ID information is stored in an information carrier fixed to said used printing plate.

16. The collection system of claim 15, wherein said information carrier is fixed to a printing plate at the time of shipment from a factory.

17. The collection system of claim 16, wherein said information carrier is an IC tag (18a).

18. The collection system of claim 17, wherein said IC tag has a first storage area and a second storage area, and said first storage area stores said ID information used for judging whether to reuse said used printing plate, and said second storage area stores management information used for management of said printing plates, management of printing, and management of inks and printing media.

19. A collection container (35) for collecting a used printing plate (33) having an aluminum substrate (14) provided witch ID information, comprising the system of claim 14, and
a container body (37) for containing said used printing plates; wherein
said ID information reading unit (42) is adapted to read said ID information from said used printing plate when said used printing plate is put in said container body, said ID information reading unit being attached to said container body.

20. The collection container of claim 19, said reusability judgment unit including:
an ID information registering section (53) that registers said ID information provided to said substrate;
a matching section (54) for matching between said registered ID information and said ID information read from said used printing plate; and
a first judgment section (50) for judging said used printing plate to be reusable when said read ID information matches said registered ID information, and judging said used printing plate not to be reusable when said read ID information does not match said registered ID information or when said ID information is unreadable.

21. The collection container of claim 20, wherein said reusability judgment unit further includes:
a reusable printing plate counting section (55) for counting the number of said used printing plates judged to be reused as a reusable number, among said used printing plates contained in said container body;
a collected printing plate counting section (52) for counting total number of said used printing plates collected in said container body as a collected number; and
an aluminum content calculating section (56) for calculating a percentage of aluminum content of said used printing plates on said per collection container basis based on said collected number and said reusable number; and
a second judgment section (50) for judging said used printing plates on said per collection container basis to be reusable when said percentage of aluminum content is equal to or above a predetermined value, and judging said used printing plates on said per collection container basis not to be reusable when said percentage of aluminum content is below said predetermined value.

22. The collection container of claim 19, wherein said reusability judgment unit further includes:
an ID information registering section (53) that registers said ID information provided to said substrate, a percentage of aluminum content and a weight of a printing plate corresponding to said ID information, and a percentage of aluminum content and a weight of a printing plate having unreadable ID information;
an aluminum content and a weight reading section for reading said percentage of aluminum content and said weight from said ID information registering section based on said ID information read from said used printing plate every time said used printing plate is put in said container body;
an aluminum content calculating section (56) for calculating a percentage of aluminum content of said used printing plates on said per collection container basis based on said read percentage of aluminum content and said read weight of each of said printing plates;
a second judgment section (50) for judging said used printing plates on said per collection container basis to be reusable when said percentage of aluminum content on said per collection container basis is equal to or above a predetermined value, and judging said used printing plates on said per collection container basis not to be reusable when said percentage of aluminum content on said per collection container basis is below said predetermined value.

23. The collection container of claim 19, wherein said reusability judgment unit further includes:
an ID information registering section (53) that registers said ID information provided to said substrate, a percentage of aluminum content, a percentage of impurity content and a weight of a printing plate corresponding to said ID information, and a percentage of aluminum content, a percentage of an impurity content and a weight of a printing plate having unreadable ID information;
a content and a weight reading section for reading said percentage of aluminum content, said percentage of impurity content and said weight from said ID information registering section based on said ID information read from said used printing plate every time said used printing plate is put in said container body;
an aluminum content calculating section (56) for calculating a percentage of aluminum content on said per collection container basis based on said read percentage of aluminum content and said read weight;
an impurity content calculating section (56) for calculating a percentage of impurity content on said per collection container basis based on said read percentage of impurity content and said read weight; and
a second judgment section (50) for judging said used printing plates on said per collection container basis to be reusable when said percentage of aluminum content on said per collection container basis is equal to or above a predetermined value and said percentage of impurity content on said per collection container basis is below a predetermined limit, and judging said used printing plates on said per collection container basis not to be reusable when said percentage of aluminum content on said per collection container basis is below said predetermined value and said percentage of impurity content on said per collection container basis is equal to or above said predetermined limit.

24. The collection container of claim 23 further including:
a recycle price determining section for determining a recycle price of said used printing plates on said per collection container basis judged to be reusable as a first recycle price, and a recycle price of said used printing plates on said per collection container basis judged not to be reusable as a second recycle price lower than said first recycle price.

## Patentansprüche

1. Sammelverfahren für eine gebrauchte Druckplatte (33), die ein mit Kennungsinformation ausgestattetes Aluminiumsubstrat (14) aufweist, umfassend die Schritte:
(A) Lesen der Kennungsinformation zur Zeit des Sammelns der gebrauchten Druckplatte; und
(B) Beurteilen anhand der gelesenen Kennungsinformation, ob die gebrauchte Druckplatte als Rohmaterial für das Substrat wiederzuverwenden ist.

2. Sammelverfahren nach Anspruch 1, bei dem der Schritt (B) folgende Schritte beinhaltet:
(b1) Registrieren der Kennungsinformation des Substrats in einem Kennungsinformations-Registrierabschnitt (53), bevor die gebrauchte Druckplatte eingesammelt wird;
(b2)Abgleichen der registrierten Kennungsinformation und der von der gebrauchten Druckplatte gelesenen Kennungsinformation; und
(b3) Beurteilen der möglichen Wiederverwendung der gebrauchten Druckplatte, wenn die gelesene Kennungsinformation mit der registrierten Kennungsinformation übereinstimmt, und Beurteilen, dass die gebrauchte Druckplatte nicht wieder zu verwenden ist, wenn die gelesene Kennungsinformation nicht mit der registrierten Kennungsinformation übereinstimmt oder die Kennungsinformation nicht lesbar ist.

3. Sammelverfahren nach Anspruch 2, bei dem die gebrauchten Druckplatten kastenweise gesammelt werden und der Schritt (B) weiterhin folgende Schritte enthält:
(b4)Zählen der als wiederverwendbar beurteilten gebrauchten Druckplatten als Wederverwendungszahl;
(b5)Zählen der Anzahl der kastenweise gesammelten gebrauchten Druckplatten als Sammelzahl;
(b6) Berechnen eines Prozentsatzes des Aluminiumgehalts der kastenweise gesammelten Druckplatten, basierend auf der Sammelzahl und der Wederverwendungszahl; und
(b7) kastenweises Beurteilen, dass die gebrauchten Druckplatten wiederzuverwenden sind, wenn der Prozentsatz des Aluminiumgehalts gleich oder größer einem vorbestimmten Wert ist, und kastenweises Beurteilen, dass die gebrauchten Druckplatten nicht wiederzuverwenden sind, wenn der Prozentsatz des Aluminiumgehalts unterhalb des vorbestimmten Werts liegt.

4. Sammelverfahren nach Anspruch 1, bei dem die verwendeten Druckplatten kastenweise gesammelt werden, und der Schritt (B) folgende Schritte beinhaltet:
(b1)Registrieren der an dem Substrat vorhandenen Kennungsinformation in einem Kennungsinformations-Registrierabschnitt (53), Registrieren eines Prozentsatzes des Aluminiumgehalts und eines Gewichts einer der Kennungsinformation entsprechenden Druckplatte und Registrieren eines Prozentsatzes des Aluminiumgehalts und eines Gewichts einer Druckplatte mit unlesbarer Kennungsinformation, bevor die gebrauchten Druckplatten gesammelt werden;
(b2)Lesen des Prozentsatzes des Aluminiumgehalts und des Gewichts aus dem Kennungsinformations-Registrierabschnitt basierend auf der von der gebrauchten Druckplatte gelesenen Kennungsinformation jedes mal, wenn die gebrauchte Druckplatte gesammelt wird;
(b3)Berechnen eines Prozentsatzes des Aluminiumgehalts pro Kasten, basierend auf dem gelesenen Prozentsatz des Aluminiumgehalts und des gelesenen Gewichts; und
(b4)kastenweises Beurteilen, dass die gebrauchten Druckplatten wiederzuverwenden sind, wenn der Prozentsatz des Aluminiumgehalts pro Kasten gleich oder größer einem vorbestimmten Wert ist, und kastenweises Beurteilen, dass die gebrauchten Druckplatten nicht wiederzuverwenden sind, wenn der Prozentsatz des Aluminiumgehalts pro Kasten unterhalb des vorbestimmten Werts liegt.

5. Sammelverfahren nach Anspruch 1, bei dem die verwendeten Druckplatten kastenweise gesammelt werden, und der Schritt (B) weiterhin folgende Schritte beinhaltet:
(b1) Registrieren der an dem Substrat vorhandenen Kennungsinformation in einem Kennungsinformations-Registrierabschnitt (53), eines Prozentsatzes des Aluminiumgehalts, eines Prozentsatzes von Verunreinigungsgehalt und eines Gewichts einer der Kennungsinformation entsprechenden Druckplatte, außerdem eines Prozentsatzes des Aluminiumgehalts, eines Prozentsatzes eines Verunreinigungsgehalts und eines Gewichts einer Druckplatte mit unlesbarer Kennungsinformation, bevor die gebrauchten Druckplatten gesammelt werden;
(b2) Lesen des Prozentsatzes des Aluminiumgehalts, des Prozentsatzes des Verunreinigungsgehalts und des Gewichts aus dem Kennungsinformations-Registrierabschnitt, basierend auf der von der gebrauchten Druckplatte gelesenen Kennungsinformation, jedes mal dann, wenn die gebrauchte Druckplatte gesammelt wird;
(b3) Berechnen eines Prozentsatzes des Aluminiumgehalts pro Kasten, basierend auf dem gelesenen Prozentsatz des Aluminiumgehalts und des gelesenen Gewichts;
(b4) Berechnen eines Prozentsatzes des Verunreinigungsgehalts pro Kasten, basierend auf dem gelesenen Prozentsatz des Verunreinigungsgehalts und des gelesenen Gewichts; und
(b5) kastenweises Beurteilen, dass die gebrauchten Druckplatten wiederzuverwenden sind, wenn der Prozentsatz des Aluminiumgehalts pro Kasten gleich oder größer einem vorbestimmten Wert ist und der Prozentsatz des Verunreinigungsgehalts pro Kasten unterhalb einem vorbestimmten Grenzwert liegt, und kastenweises Beurteilen, dass die gebrauchten Druckplatten nicht wiederzuverwenden sind, wenn der Prozentsatz des Aluminiumgehalts pro Kasten unterhalb des vorbestimmten Werts liegt und der Prozentsatz des Verunreinigungsgehalts pro Kasten gleich oder größer als der vorbestimmte Grenzwert ist.

6. Sammelverfahren nach Anspruch 5, weiterhin umfassend den Schritt:
(C) Bestimmen eines Recycling-Preises der gebrauchten Druckplatten pro Kasten, die als wiederverwendbar beurteilt wurden, als ersten Recycling-Preis, und Bestimmen eines Recycling-Preises der gebrauchten Druckplatten pro Kasten, die als nicht wiederverwendbar beurteilt wurden, als zweiten Recyling-Preis, der niedriger liegt als der erste Recycling-Preis.

7. Sammelverfahren nach Anspruch 1, bei dem die Kennungsinformation in einem an der gebrauchten Druckplatte fixierten Informationsträger gespeichert ist.

8. Sammelverfahren nach Anspruch 7, bei dem der Informationsträger ein Kennungsetikett (18a) ist und in dem Schritt (A) die Kennungsinformation von dem Kennungsetikett mit Hilfe eines Kennungsetikettlesers (42) gelesen wird.

9. Sammelverfahren nach Anspruch 8, bei dem das Kennungsetikett außerdem Information speichert, die für die Verwaltung des Druckvorgangs, die Verwaltung der Druckplatten und die Verwaltung von Tinten und Druckmaterial verwendet wird.

10. Recyclingverfahren für gebrauchte Druckplatten (33), die ein Aluminiumsubstrat (14) mit Kennungsinformation aufweisen, umfassend die Schritte des Sammelverfahrens nach Anspruch 1, und
(C) Recyceln der als wiederverwendbar beurteilten gebrauchten Druckplatte.

11. Recyclingverfahren nach Anspruch 10, bei dem der Schritt (C) folgende Schritte enthält:
(c1) Packen der als wiederverwendbar beurteilten Druckplatten zu einem Bündel;
(c2) Erzeugen eines recycelten Gussblocks (63) durch Schmelzen und Gießen der gebrauchten Druckplatten mindestens auf der erwähnten kastenweisen Grundlage;
(c3) Analysieren einer Zusammensetzung des recycelten Gussblocks; und
(c4) Beurteilen, ob der recycelte Gussblock einen notwendigen Aluminiumgehalt-Prozentsatz aufweist, um als Rohmaterial für das Substrat wiederverwendet zu werden, basierend auf der Zusammensetzungsanalyse im Schritt (c3).

12. Recyclingverfahren nach Anspruch 11, bei dem die gebrauchten Druckplatten zu einem ersten Recyclingpreis erworben werden, wenn die gebrauchten Druckplatten in dem Schritt (c4) als wiederverwendbar beurteilt werden, und die gebrauchten Druckplatten zu einem zweiten Recyclingpreis erworben werden, der niedriger ist als der erste Preis, wenn die gebrauchten Druckplatten in dem Schritt (c4) als nicht wiederverwendbar beurteilt werden.

13. Recyclingverfahren nach Anspruch 11, weiterhin enthaltend den Schritt:
(c5) Fertigen des Substrats durch Walzen des recycelten Gussblocks, der in dem Schritt (c4) als wiederverwendbar beurteilt wurde.

14. Sammelsystem für eine verwendete Druckplatte (33), die ein mit Kennungsinformation ausgestattetes Aluminiumsubstrat aufweist, umfassend:
eine Kennungsinformations-Leseeinheit (42) zum Lesen der Kennungsinformation von der gebrauchten Druckplatte; und
eine Wiederverwendbarkeits-Beurteilungseinheit (50) zum Beurteilen anhand der gelesenen Kennungsinformation, ob die gebrauchte Druckplatte als Rohmaterial für das Substrat wiederzuverwenden ist.

15. Sammelsystem nach Anspruch 14, bei dem die Kennungsinformation in einem an der gebrauchten Druckplatte fixierten Informationsträger gespeichert ist.

16. Sammelsystem nach Anspruch 15, bei dem der Informationsträger an einer Druckplatte fixiert wird, wenn der Versand ab Fabrik erfolgt.

17. Sammelsystem nach Anspruch 16, bei dem der Informationsträger ein Kennungsetikett (18a) ist.

18. Sammelsystem nach Anspruch 17, bei dem das Kennungsetikett einen ersten Speicherbereich und einen zweiten Speicherbereich besitzt, und der erste Speicherbereich die Kennungsinformation speichert, die zum Beurteilen verwendet wird, ob die gebrauchte Druckplatte wiederzuverwenden ist, und der zweite Speicherbereich Verwaltungsinformation speichert, die verwendet wird zum Verwalten der Druckplatten, zum Verwalten des Druckvorgangs und zum Verwalten von Tinten und Druckträgern.

19. Sammelbehälter (35) zum Sammeln einer gebrauchten Druckplatte (33), die ein mit Kennungsinformation ausgestattetes Aluminiumsubstrat (14) aufweist, umfassend das System nach Anspruch 14, und
einen Behälterkörper (37) zur Aufnahme der gebrauchten Druckplatten, wobei die Kennungsinformations-Leseeinheit (42) dazu ausgebildet ist, die Kennungsinformation von der gebrauchten Druckplatte zu lesen, wenn die gebrauchte Druckplatte in den Behälterkörper eingegeben wird, wobei die Kennungsinformations-Leseeinheit an dem Behälterkörper angebracht ist.

20. Sammelbehälter nach Anspruch 19, wobei die Wederverwendbarkeits-Beurteilungseinheit enthält:
einen Kennungsinformations-Registrierabschnitt (53), der die an dem Substrat vorgesehene Kennungsinformation registriert;
einen Abgleichabschnitt (54) zum Abgleichen der registrierten Kennungsinformation mit der von der gebrauchten Druckplatte gelesenen Kennungsinformation; und
einen ersten Beurteilungsabschnitt (50) zum Beurteilen der gebrauchten Druckplatte wieder zu verwenden, wenn die gelesene Kennungsinformation mit der registrierten Kennungsinformation übereinstimmt, und Beurteilen, dass die gebrauchte Druckplatte nicht wiederzuverwenden ist, wenn die gelesene Kennungsinformation nicht mit der registrierten Kennungsinformation übereinstimmt oder die Kennungsinformation nicht lesbar ist.

21. Sammelbehälter nach Anspruch 20, bei dem die Wiederverwendbarkeits-Beurteilungseinheit weiterhin enthält:
einen Wederverwendungs-Druckplatten-Zählabschnitt (55) zum Zählen der Anzahl gebrauchter Druckplatten, die als wiederverwendbar beurteilt wurden, als Wederverwendungszahl, betreffend die gebrauchten Druckplatten, die in dem Behälterkörper enthalten sind;
einen Sammel-Druckplatten-Zählabschnitt (52) zum Zählen der gesamten Anzahl der in dem Behälterkörper gesammelten gebrauchten Druckplatten als Sammelzahl; und
einen Aluminiumgehalt-Berechnungsabschnitt (56) zum Berechnen eines Aluminiumgehalt-Prozentsatzes der gebrauchten Druckplatte pro Sammelbehälter, basierend auf der Sammelzahl und der Wiederverwendungszahl; und
einen zweiten Beurteilungsabschnitt (50) zum Beurteilen der gebrauchten Druckplatten pro Sammelbehälter als wieder zu verwenden, wenn der Aluminiumgehalt-Prozentsatz gleich oder größer einem vorbestimmten Wert ist, und zum Beurteilen der gebrauchten Druckplatten pro Sammelbehälter als nicht wieder zu verwenden, wenn der Aluminiumgehalt-Prozentsatz unter dem vorbestimmten Wert liegt.

22. Sammelbehälter nach Anspruch 19, bei dem die wederverwendbarkeits-Beurteilungseinheit weiterhin enthält:
einen Kennungsinformations-Registrierabschnitt (53), der die an dem Substrat vorgesehene Kennungsinformation, einen Aluminiumgehalt-Prozentsatz und ein Gewicht einer der Kennungsinformation entsprechende Druckplatte, und einen Aluminiumgehalt-Prozentsatz und ein Gewicht einer unlesbare Kennungsinformation aufweisenden Druckplatte registriert;
einen Aluminiumgehalt- und Gewichts-Leseabschnitt zum Lesen des Aluminiumgehalt-Prozentsatzes und des Gewichts aus dem Kennungsinformations-Registrierabschnitt basierend auf der von der gebrauchten Druckplatte gelesenen Kennungsinformation jedes mal dann, wenn die gebrauchte Druckplatte in den Behälterkörper eingegeben wird;
einen Aluminiumgehalt-Berechnungsabschnitt (56) zum Berechnen eines Prozentsatzes des Aluminiumgehalts der gebrauchten Druckplatten pro Sammelbehälter, basierend auf dem gelesenen Aluminiumgehalt-Prozentsatz und dem gelesenen Gewicht jedes der Druckplatten;
einen zweiten Beurteilungsabschnitt (50) zum Beurteilen der gebrauchten Druckplatten pro Sammelbehälter als wiederzuverwenden, wenn der Aluminiumgehalt-Prozentsatz pro Sammelbehälter gleich oder größer einem vorbestimmten Wert ist, und Beurteilen der gebrauchten Druckplatten pro Sammelbehälter als nicht wiederzuverwenden, wenn der Aluminiumgehalt-Prozentsatz pro Sammelbehälter unter dem vorbestimmten Wert liegt.

23. Sammelbehälter nach Anspruch 19, bei dem die Wiederverwendbarkeits-Beurteilungseinheit weiterhin enthält:
einen Kennungsinformations-Registrierabschnitt (53), der die an dem Substrat vorgesehene Kennungsinformation, einen Prozentsatz des Aluminiumgehalts, einen Prozentsatz des Verunreinigungsgehalts und ein Gewicht einer der Kennungsinformation entsprechenden Druckplatte registriert und einen Aluminiumgehalt-Prozentsatz, einen Verunreinigungsgehalt-Prozentsatz und ein Gewicht einer eine unlesbare Kennungsinformation aufweisenden Druckplatte registriert;
einen Gehalt- und Gewichts-Leseabschnitt zum Lesen des Aluminiumgehalt-Prozentsatzes, des Verunreinigungsgehalt-Prozentsatzes und des Gewichts aus dem Kennungsinformations-Registrierabschnitt, basierend auf der von der gebrauchten Druckplatte gelesenen Kennungsinformation jedes mal dann, wenn die gebrauchte Druckplatte in den Behälterkörper eingegeben wird;
einen Aluminiumgehalt-Berechnungsabschnitt (56) zum Berechnen eines Aluminiumgehalt-Prozentsatzes pro Sammelbehälter, basierend auf dem gelesenen Aluminiumgehalt-Prozentsatz und dem gelesenen Gewicht;
einen Verunreinigungsgehalt-Berechnungsabschnitt (56) zum Berechnen eines Verunreinigungsgehalt-Prozentsatzes pro Sammelbehälter, basierend auf dem gelesenen Verunreinigungsgehalt-Prozentsatz und dem gelesenen Gewicht; und
einem zweiten Beurteilungsabschnitt (50) zum Beurteilen der verwendeten Druckplatten pro Sammelbehälter als wiederzuverwenden, wenn der Aluminiumgehalt-Prozentsatz pro Sammelbehälter gleich oder größer einem vorbestimmten Wert ist und der Verunreinigungsgehalt-Prozentsatz pro Sammelbehälter unter einem vorbestimmten Grenzwert liegt, und zum Beurteilen der verwendeten Druckplatten pro Sammelbehälter als nicht wiederzuverwenden, wenn der Aluminiumgehalt-Prozentsatz pro Sammelbehälter unter dem vorbestimmten Wert liegt und der Verunreinigungsgehalt-Prozentsatz pro Sammelbehälter gleich oder größer dem vorbestimmten Grenzwert ist.

24. Sammelbehälter nach Anspruch 23, weiterhin umfassend:
einen Recyclingpreis-Bestimmungsabschnitt zum Bestimmen eines Recyclingpreises der gebrauchten Druckplatten pro Sammelbehälter, die als wiederzuverwenden beurteilt wurden, als ersten Recyclingpreis, und einen Recyclingpreis der gebrauchten Druckplatten pro Sammelbehälter, die als nicht wiederzuverwenden beurteilt wurden, als zweiten Recyclingpreis, der geringer als der ersten Recyclingpreis ist.

## Revendications

1. Procédé de collecte pour une plaque d'impression usagée (33) présentant un substrat en aluminium (14) doté d'informations ID, comprenant les étapes pour :
(A) lire lesdites informations ID au moment de la collecte de ladite plaque d'impression usagée, et
(B) juger si l'on peut ou non réutiliser ladite plaque d'impression usagée comme matière première pour ledit substrat en fonction desdites informations ID lues.

2. Procédé de collecte selon la revendication 1, ladite étape (B) incluant les étapes pour :
(b1) enregistrer lesdites informations ID dudit substrat avec une section d'enregistrement d'informations ID (53) avant collecte de ladite plaque d'impression usagée ;
(b2) assurer la concordance entre lesdites informations ID enregistrées et lesdites informations ID lues à partir de ladite plaque d'impression usagée, et
(b3) juger de réutiliser ladite plaque d'impression usagée lorsque lesdites informations ID lues concordent avec lesdites informations ID enregistrées, et juger de ne pas réutiliser ladite plaque d'impression usagée lorsque lesdites informations ID lues ne concordent pas avec lesdites informations ID enregistrées, ou lorsque lesdites informations ID sont illisibles.

3. Procédé de collecte selon la revendication 2, dans lequel lesdites plaques d'impression usagées sont collectées sur une base boîte par boîte, et ladite étape (B) inclut en outre les étapes pour :
(b4) compter le nombre desdites plaques d'impression usagées jugées réutilisables comme nombre réutilisable ;
(b5) compter le nombre desdites plaques d'impression usagées collectées sur ladite base boîte par boîte comme nombre collecté ;
(b6) calculer un pourcentage de teneur en aluminium desdites plaques d'impression usagées collectées sur ladite base boîte par boîte, en fonction dudit nombre collecté et dudit nombre réutilisable, et
(b7) juger de réutiliser lesdites plaques d'impression sur ladite base boîte par boîte lorsque ledit pourcentage de ladite teneur en aluminium est égal ou supérieur à une valeur prédéterminée, et juger de ne pas réutiliser lesdites plaques d'impression usagées sur ladite base boîte par boîte lorsque ledit pourcentage de teneur en aluminium est inférieur à ladite valeur prédéterminée.

4. Procédé de collecte selon la revendication 1, dans lequel lesdites plaques d'impression usagées sont collectées sur une base boîte par boîte, et ladite étape (B) inclut en outre les étapes pour :
(b1) enregistrer avec une section d'enregistrement d'informations ID (53) lesdites informations ID fournies audit substrat, un pourcentage de teneur en aluminium et un poids d'une plaque d'impression correspondant auxdites informations ID, et un pourcentage de teneur en aluminium et un poids d'une plaque d'impression présentant des informations ID illisibles, avant collecte desdites plaques d'impression usagées ;
(b2) lire ledit pourcentage de teneur en aluminium et ledit poids à partir de ladite section d'enregistrement d'informations ID, en fonction desdites informations ID lues à partir de ladite plaque d'impression usagée, à chaque fois que ladite plaque d'impression usagée est collectée ;
(b3) calculer un pourcentage de teneur en aluminium sur ladite base boîte par boîte, en fonction dudit pourcentage lu de teneur en aluminium et dudit poids lu, et
(b4) juger de réutiliser lesdites plaques d'impression usagées sur ladite base boîte par boîte lorsque ledit pourcentage de teneur en aluminium sur ladite base boîte par boîte est égal ou supérieur à une valeur prédéterminée, et juger de ne pas réutiliser lesdites plaques d'impression usagées sur ladite base boîte par boîte lorsque ledit pourcentage de teneur en aluminium, sur ladite base boîte par boîte, est inférieur à ladite valeur prédéterminée.

5. Procédé de collecte selon la revendication 1, dans lequel lesdites plaques d'impression usagées sont collectées sur une base boîte par boîte, et ladite étape (B) inclut en outre les étapes pour :
(b1) enregistrer avec une section d'enregistrement d'informations ID (53) lesdites informations ID fournies audit substrat, un pourcentage de teneur en aluminium, un pourcentage de teneur en impuretés et un poids d'une plaque d'impression correspondant auxdites informations ID, ainsi qu'un pourcentage de teneur en aluminium, un pourcentage de teneur en impuretés et un poids d'une plaque d'impression présentant des informations ID illisibles, avant collecte desdites plaques d'impression usagées ;
(b2) lire ledit pourcentage de teneur en aluminium, ledit pourcentage de teneur en impuretés et ledit poids à partir de ladite section d'enregistrement d'informations ID en fonction desdites informations ID lues à partir de ladite plaque d'impression usagée, à chaque fois que ladite plaque d'impression usagée est collectée ;
(b3) calculer un pourcentage de teneur en aluminium sur ladite base boîte par boîte, en fonction dudit pourcentage lu en teneur en aluminium et dudit poids lu;
(b4) calculer un pourcentage de teneur en impuretés sur ladite base boîte par boîte, en fonction dudit pourcentage lu de teneur en impuretés et dudit poids lu, et
(b5) juger de réutiliser lesdites plaques d'impression usagées sur ladite base boîte par boîte lorsque ledit pourcentage de teneur en aluminium, sur ladite base boîte par boîte, est égal ou supérieur à une valeur prédéterminée, et ledit pourcentage de teneur en impuretés sur ladite base boîte par boîte est inférieur à un seuil prédéterminé, et juger de ne pas réutiliser lesdites plaques d'impression usagées sur ladite base boîte par boîte lorsque ledit pourcentage de teneur en aluminium, sur ladite base boîte par boîte, est inférieur à ladite valeur prédéterminée et ledit pourcentage de teneur en impuretés sur ladite base boîte par boîte est égal ou supérieur audit seuil prédéterminé.

6. Procédé de collecte selon la revendication 5, incluant en outre l'étape pour :
(c) déterminer un prix de recyclage desdites plaques d'impression usagées sur ladite base boîte par boîte jugées réutilisables comme premier prix de recyclage, et déterminer un prix de recyclage desdites plaques d'impression usagées sur ladite base boîte par boîte jugées non réutilisables comme second prix de recyclage inférieur audit premier prix de recyclage.

7. Procédé de collecte selon la revendication 1, dans lequel lesdites informations ID sont stockées sur un support d'informations fixé sur ladite plaque d'impression usagée.

8. Procédé de collecte selon la revendication 7, dans lequel ledit support d'informations est une étiquette à circuit intégré (18a), et lors de ladite étape (A), lesdites informations ID sont lues à partir de ladite étiquette à circuit intégré à l'aide d'un lecteur d'étiquettes à circuit intégré (42).

9. Procédé de collecte selon la revendication 8, dans lequel ladite étiquette à circuit intégré stocke en outre des informations utilisées pour la gestion de l'impression, la gestion desdites plaques d'impression, et la gestion d'encres et de supports d'impression.

10. Procédé de recyclage de plaques d'impression usagées (33) présentant un substrat en aluminium (14) doté d'informations ID, comprenant les étapes du procédé de collecte selon la revendication 1, et l'étape pour :
(c) recycler ladite plaque d'impression usagée jugée réutilisable.

11. Procédé de recyclage selon la revendication 10, dans lequel ladite étape (C) inclut les étapes pour :
(c1) emballer lesdites plaques d'impression usagées jugées réutilisables en fardeau ;
(c2) produire un lingot recyclé (63) en faisant fondre et en moulant lesdites plaques d'impression usagées au moins sur ladite base boîte par boîte ;
(c3) analyser une composition dudit lingot recyclé, et
(c4) juger si ledit lingot recyclé présente ou non un pourcentage nécessaire de teneur en aluminium pour être réutilisé comme matière première pour ledit substrat, en fonction de ladite analyse de composition lors de ladite étape (c3).

12. Procédé de recyclage selon la revendication 11, dans lequel lesdites plaques d'impression usagées sont achetées à un premier prix de recyclage lorsque lesdites plaques d'impression usagées sont jugées réutilisables lors de ladite étape (c4), et lesdites plaques d'impression usagées sont achetées à un second prix de recyclage, inférieur audit premier prix, lorsque lesdites plaques d'impression usagées sont jugées non réutilisables lors de ladite étape (c4).

13. Procédé de recyclage selon la revendication 11, incluant en outre l'étape pour :
(c5) produire ledit substrat en laminant ledit lingot recyclé jugé réutilisable lors de ladite étape (c4).

14. Système de collecte pour une plaque d'impression usagée (33) présentant un substrat en aluminium (14) doté d'informations ID, comprenant :
une unité de lecture d'informations ID (42) destinée à lire lesdites informations ID à partir de ladite plaque d'impression usagée, et
une unité de jugement sur la capacité de réutilisation (50) destinée à juger si l'on peut ou non réutiliser ladite plaque d'impression usagée comme matière première pour ledit substrat, en fonction desdites informations ID lues.

15. Système de collecte selon la revendication 14, dans lequel lesdites informations ID sont stockées sur un support d'informations fixé sur ladite plaque d'impression usagée.

16. Système de collecte selon la revendication 15, dans lequel ledit support d'informations est fixé sur une plaque d'impression au moment de l'expédition à partir d'une usine.

17. Système de collecte selon la revendication 16, dans lequel ledit support d'informations est une étiquette à circuit intégré (18a).

18. Système de collecte selon la revendication 17, dans lequel ladite étiquette à circuit intégré présente une première zone de stockage et une seconde zone de stockage, et ladite première zone de stockage stocke lesdites informations ID usagées afin de juger si l'on peut ou non réutiliser ladite plaque d'impression usagée, et ladite seconde zone de stockage stocke des informations de gestion utilisées pour la gestion desdites plaques d'impression, la gestion de l'impression, et la gestion d'encres et de supports d'impression.

19. Conteneur de collecte (35) destiné à collecter une plaque d'impression usagée (33) présentant un substrat en aluminium (14) doté d'informations ID, comprenant le système selon la revendication 14, et
un corps de conteneur (37) destiné à contenir lesdites plaques d'impression usagées ; dans lequel
ladite unité de lecture d'informations ID (42) est en mesure de lire lesdites informations ID à partir de ladite plaque d'impression usagée lorsque ladite plaque d'impression usagée est mise dans ledit corps de conteneur, ladite unité de lecture d'informations ID étant fixée sur ledit corps de conteneur.

20. Conteneur de collecte selon la revendication 19, ladite unité de jugement sur la capacité de réutilisation incluant :
une section d'enregistrement d'informations ID (53) qui enregistre lesdites informations ID fournies audit substrat ;
une section de concordance (54) destinée à assurer la concordance entre lesdites informations ID enregistrées et lesdites informations ID lues à partir de ladite plaque d'impression usagée, et
une première section de jugement (50) destinée à juger ladite plaque d'impression usagée comme réutilisable lorsque lesdites informations ID lues concordent avec lesdites informations ID enregistrées, et juger ladite plaque d'impression usagée comme non réutilisable lorsque lesdites informations ID lues ne concordent pas avec lesdites informations ID enregistrées, ou lorsque lesdites informations ID sont illisibles.

21. Conteneur de collecte selon la revendication 20, dans lequel ladite unité de jugement sur la capacité de réutilisation inclut en outre :
une section de comptage de plaques d'impression réutilisables (55) destinée à compter le nombre desdites plaques d'impression usagées jugées réutilisables comme nombre réutilisable, parmi lesdites plaques d'impression usagées contenues dans ledit corps de conteneur;
une section de comptage de plaques d'impression collectées (52) destinée à compter un nombre total desdites plaques d'impressions usagées collectées dans ledit corps de conteneur comme nombre collecté, et
une section de calcul de teneur en aluminium (56) destinée à calculer un pourcentage de teneur en aluminium desdites plaques d'impression usagées, sur ladite base de conteneur de collecte, en fonction dudit nombre collecté et dudit nombre réutilisable, et
une seconde section de jugement (50) destinée à juger lesdites plaques d'impression usagées, sur ladite base de conteneur de collecte, comme réutilisables lorsque ledit pourcentage de ladite teneur en aluminium est égal ou supérieur à une valeur prédéterminée, et juger lesdites plaques d'impression usagées, sur ladite base de conteneur de collecte, comme non réutilisables lorsque ledit pourcentage de teneur en aluminium est inférieur à ladite valeur prédéterminée.

22. Conteneur de collecte selon la revendication 19, dans lequel ladite unité de jugement sur la capacité de réutilisation inclut en outre :
une section d'enregistrement d'informations ID (53) qui enregistre lesdites informations ID fournies audit substrat, un pourcentage de teneur en aluminium et un poids d'une plaque d'impression correspondant auxdites informations ID, ainsi qu'un pourcentage de teneur en aluminium et un poids d'une plaque d'impression présentant des informations ID illisibles ;
une section de lecture de teneur en aluminium et de poids destinée à lire ledit pourcentage de teneur en aluminium et ledit poids à partir de ladite section d'enregistrement d'informations ID, en fonction desdites informations ID lues à partir de ladite plaque d'impression usagée, à chaque fois que ladite plaque d'impression usagée est mise dans ledit corps de conteneur ;
une section de calcul de teneur en aluminium (56) destinée à calculer un pourcentage de teneur en aluminium desdites plaques d'impression usagées, sur ladite base de conteneur de collecte, en fonction dudit pourcentage lu de teneur en aluminium et dudit poids lu de chacune desdites plaques d'impression, et
une seconde section de jugement (50) destinée à juger lesdites plaques d'impression usagées, sur ladite base de conteneur de collecte, comme réutilisables lorsque ledit pourcentage de teneur en aluminium, sur ladite base de conteneur de collecte, est égal ou supérieur à une valeur prédéterminée, et juger lesdites plaques d'impression usagées, sur ladite base de conteneur de collecte, comme non réutilisables lorsque ledit pourcentage de teneur en aluminium, sur ladite base de conteneur de collecte, est inférieur à ladite valeur prédéterminée.

23. Conteneur de collecte selon la revendication 19, dans lequel ladite unité de jugement sur la capacité de réutilisation inclut en outre :
une section d'enregistrement d'informations ID (53) enregistrant lesdites informations ID fournies audit substrat, un pourcentage de teneur en aluminium, un pourcentage de teneur en impuretés et un poids d'une plaque d'impression correspondant auxdites informations ID, ainsi qu'un pourcentage de teneur en aluminium, un pourcentage de teneur en impuretés et un poids d'une plaque d'impression présentant des informations ID illisibles ;
une section de lecture de teneur et de poids destinée à lire ledit pourcentage de teneur en aluminium, ledit pourcentage de teneur en impuretés et ledit poids à partir de ladite section d'enregistrement d'informations ID, en fonction desdites informations ID lues à partir de ladite plaque d'impression usagée, à chaque fois que ladite plaque d'impression usagée est mise dans ledit corps de conteneur ;
une section de calcul de teneur en aluminium (56) destinée à calculer un pourcentage de teneur en aluminium sur ladite base de conteneur de collecte, en fonction dudit pourcentage lu de teneur en aluminium et dudit poids lu ;
une section de calcul de teneur en impuretés (56) destinée à calculer un pourcentage de teneur en impuretés, sur ladite base de conteneur de collecte, en fonction dudit pourcentage lu de teneur en impuretés et dudit poids lu, et
une seconde section de jugement (50) destinée à juger lesdites plaques d'impression usagées, sur ladite base de conteneur de collecte, comme réutilisables lorsque ledit pourcentage de teneur en aluminium sur ladite base de conteneur de collecte, est égal ou supérieur à une valeur prédéterminée, et ledit pourcentage de teneur en impuretés sur ladite base de conteneur de collecte, est inférieur à un seuil prédéterminé, et juger lesdites plaques d'impression usagées, sur ladite base de conteneur de collecte, comme non réutilisables lorsque ledit pourcentage de teneur en aluminium, sur ladite base de conteneur de collecte, est inférieur à ladite valeur prédéterminée et ledit pourcentage de teneur en impuretés, sur ladite base de conteneur de collecte, est égal ou supérieur audit seuil prédéterminé.

24. Conteneur de collecte selon la revendication 23, incluant en outre :
une section de détermination de prix de recyclage destinée à déterminer un prix de recyclage desdites plaques d'impression usagées, sur ladite base de conteneur de collecte, jugées réutilisables comme premier prix de recyclage, et un prix de recyclage desdites plaques d'impression usagées, sur ladite base de conteneur de collecte, jugées non réutilisables comme second prix de recyclage inférieur audit premier prix de recyclage.
